# EUROPEAN PATENT SPECIFICATION

(11) **EP 3 494 793 B1**
(45) Date of publication and mention of the grant of the patent: **26.02.2020**
(21) Application number: 17836876.7
(22) Date of filing: 28.07.2017
(51) Int. Cl.: A21C 3/06, A21D 13/80

(54) **METHOD AND DEVICE FOR MANUFACTURING ROLLED FOOD PRODUCT**
VERFAHREN UND VORRICHTUNG ZUR HERSTELLUNG EINES GEROLLTEN LEBENSMITTELPRODUKTS
PROCÉDÉ ET DISPOSITIF DE FABRICATION D'UN PRODUIT ALIMENTAIRE ROULÉ

(30) Priority: 05.08.2016 JP 2016154256
(43) Date of publication of application: 12.06.2019
(73) Proprietor: Rheon Automatic Machinery Co., Ltd., Utsunomiya-shi, Tochigi 320-0071 (JP)
(72) Inventor: HARADA Nobuaki, Utsunomiya-shi Tochigi 320-0071 (JP); FUKUGAMI Taro, Utsunomiya-shi Tochigi 320-0071 (JP); HIGUCHI Katsumichi, Utsunomiya-shi Tochigi 320-0071 (JP); TAKANOHASHI Takuto, Utsunomiya-shi Tochigi 320-0071 (JP)
(74) Representative: Grünecker Patent- und Rechtsanwälte PartG mbB
(86) International application number: PCT/JP2017/027490
(87) International publication number: WO 2018/025771

(56) References cited:
- EP-A1- 2 762 005
- EP-A2- 1 256 279
- WO-A1-86/02808
- JP-A- H10 304 812
- US-A- 4 741 263
- US-A- 5 077 072
- US-B1- 8 353 742

## Description

### TECHNICAL FIELD

The invention relates to a method according to the preamble of independent claim 1 and a device according to the preamble of independent claim 5 for rolling up flat dough around or without a filling to produce a rolled food product.

### BACKGROUND ART

There are proposed production methods and devices to place a filling such as jam or cream on a piece of croissant dough for instance and roll them up to produce a rolled food product. JP 2524550 B2 discloses a related art.

A line for treating rolled food products is known from EP 2 762 005 A1. Along said treatment line a rolling-up device is provided that comprises a redirection element oscillatable about an oscillation axis and arranged at a discontinuity of a conveyor belt for least one food product to be treated.

An apparatus for producing croissant dough rolls of a given diameter by rolling up a lengthy dough piece is described in US 4 741 263 A. A rolling mechanism for rolling up the dough piece has a lower endless belt device and an upper endless belt device arranged spaced apart one above the other.

US 8 353 742 B1 teaches a machine for utilizing gravity to reduce costs when rolling a food dough casing around a sausage. Said machine comprises a first conveyor for conveying the food dough casing, a second conveyor, a third conveyor, a carrier, and a pusher block for pushing the sausage.

### SUMMARY OF THE INVENTION

A soft filling such as jam might be, when rolled in dough, squeezed out by the pressure applied then. On the other hand, if the dough is overly loosely rolled up to lose close contact between the dough and the filling, or the dough of itself, the rolled food product cannot retain its shape stably and this may cause any problem of its appearance. This problem is solved according to the invention by providing a method having the features of independent claim 1 and a device having the features of independent claim 5 for rolling up flat dough around or without a filling to produce a rolled food product. Advantageous embodiments of the method and the device according to the invention are the subject of the dependent claims.

According to an aspect, a method for rolling up flat dough around or without a filling to produce a rolled food product is comprised of: laying and conveying the dough with or without the filling onto a first belt having an end and moving in a first direction toward the end; bringing the dough on the first belt into contact with a second belt being adjacent to the end and movable in a second direction perpendicular to the first direction to curve the dough; guiding the dough curved along the second belt around along holding members arranged along the first belt, whereby rolling up the dough; and shifting the holding members in the second direction in accordance with increase in a number of turns of the dough.

According to another aspect, a device for rolling up flat dough around or without a filling to produce a rolled food product is comprised of: a first belt having an end and moving in a first direction toward the end to convey the dough with or without the filling laid on the first belt; a second belt so disposed adjacent to the end as to make the dough conveyed in the first direction be brought into contact with the second belt to curve the dough and movable in a second direction perpendicular to the first direction; and holding members arranged along the first belt to guide the dough curved along the second belt around along the holding members, whereby rolling up the dough.

### BRIEF DESCRIPTION OF DRAWINGS

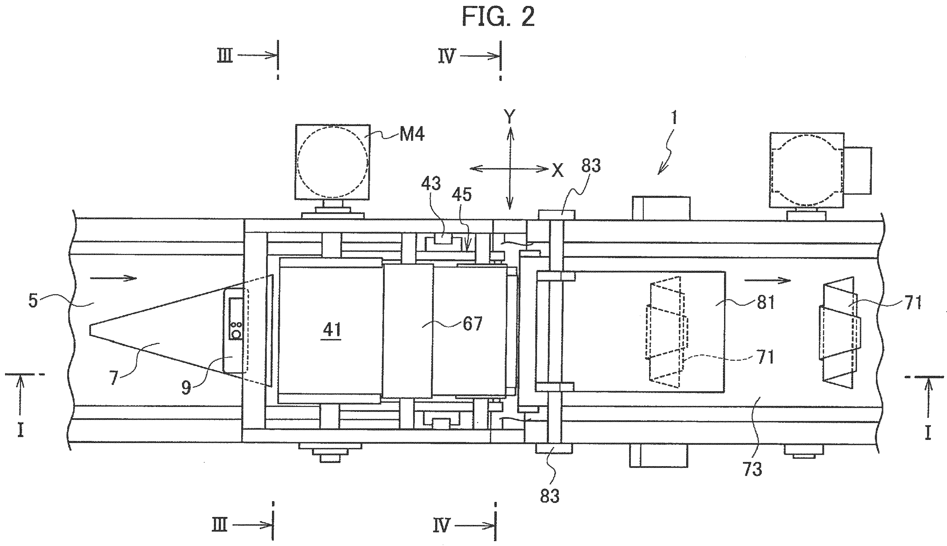

FIG. 1 is a partially-sectional elevational view of a major part of a food product production device according to a first embodiment, taken from a line I-I of FIG. 2, which shows a state where an upper conveyor belt is moved down.
FIG. 2 is a plan view of the major part of the food product production device.
FIG. 3 is a partially-sectional side view of the major part of the food product production device, taken from a line III-III of FIG. 2.

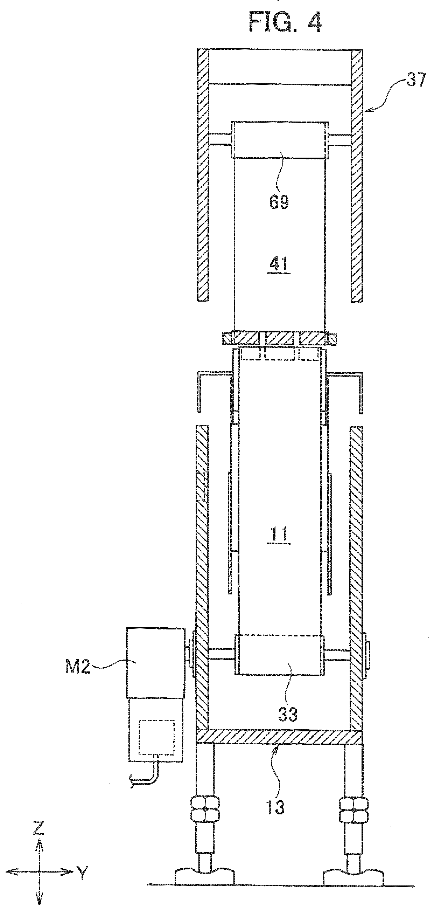

FIG. 4 is a partially-sectional side view of the major part of the food product production device, taken from a line IV-IV of FIG. 2.
FIG. 5 is a partially-sectional side view of the major part of the food product production device, which shows a state where the upper conveyor belt is moved up.
FIGs. 6A through 6E are partial elevational views of food products and the device for describing partly a series of steps for rolling up flat dough around a filling.
FIGs. 7A through 7D are partial elevational views of the food products and the device for describing steps subsequent to FIGs. 6.
FIGs. 8A through 8D are partial elevational views for shortly describing a series of steps for rolling up flat dough around a filling in a case where the filling is relatively large.
FIGs. 9A through 9D are partial elevational views for shortly describing a series of steps for rolling up flat dough around a filling in a case where the filling is relatively small.
FIGs. 10A through 10D are partial elevational views for shortly describing a series of steps for rolling up flat dough without a filling.
FIGs. 11A through 11E are partial elevational views for describing partly a series of steps for rolling up flat dough around a filling in a case where the filling is a plate-like matter like as a tablet of chocolate.
FIGs. 12A through 12E are partial elevational views for describing steps subsequent to FIGs. 11.
FIG. 13 is a partially-sectional elevational view of a major part of a food product production device according to a second embodiment, which shows a state where an upper conveyor belt is moved down.
FIG. 14 is a partially-sectional elevational view of the major part of the food product production device according to the second embodiment, which shows a state where the upper conveyor belt is moved up.
FIG. 15 is a partially-sectional elevational view of a major part of a food product production device according to a modified example, which shows a state where an upper conveyor belt is moved down.
FIG. 16 is a plan view of the food product production device shown in FIG. 15, in which the upper conveyor belt is not shown.
FIG. 17 is a partially-sectional elevational view of a major part of the food product production device according to the modified example, taken from a line XVII-XVII of FIG. 18, which shows a state where the upper conveyor belt is moved up.
FIG. 18 is a plan view of the food product production device according to the modified example.
FIGs. 19A through 19D are partial elevational views of foods and the device for describing a series of steps for rolling up flat dough around a filling according to the modified example.
FIGs. 20A through 20D are partial elevational views of the foods and the device for describing steps subsequent to the FIGs. 19.

### DESCRIPTION OF EMBODIMENTS

Exemplary embodiments will be described hereinafter with reference to the appended drawings.

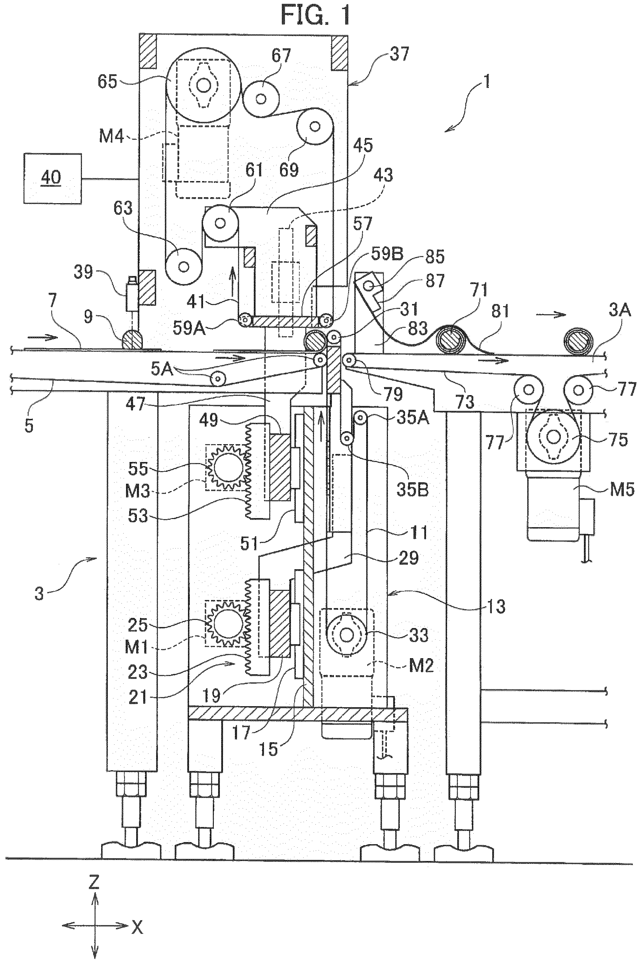

Referring to FIG. 1, a food product production device 1 of a first embodiment is provided with a frame mount 3. On an upper part of the frame mount 3, a first conveyor belt 5 is provided in a way of being capable of running in an X-axis direction (the lateral direction in FIG. 1). The X-direction is in general, but not limited to, horizontal. The first conveyor belt 5 is passed around a driven pulley 5A provided on the frame mount 3. The first conveyor belt 5 acts to convey flat food dough 7 such croissant dough from the upstream side (the left side in FIG. 1) to the downstream side (the right side in FIG. 1) and is driven to run by a proper motor (not shown) such as a servomotor. The direction where an upper face of the first conveyor belt 5 runs is defined and used as a first direction in the following description and the appended claims. More specifically, the upper face of the first conveyor belt 5 moves in the first direction toward its end section at the downstream side where the driven pulley 5A is provided, and the food dough 7 accompanies therewith and is thus conveyed thereby. To roll up the food dough 7 around a core 9 as a soft filling such as jam or cream, the core 9 is laid at a leading end side (one end side in the X-axis direction) of the food dough 7. In the meantime, in a case where only the food dough 7 is to be rolled up into a columnar shape (including a cylindrical shape), the core 9 is dispensable.

At the downstream end side (the right end side in FIG. 1) of the first conveyor belt 5, a second conveyor belt 11 is provided in a way of being capable of rising and sinking relative to the first conveyor belt 5. The direction of rising and sinking is preferably along a Z-axis perpendicular to the X-axis, which is normally perpendicular to the first direction as well. This direction is defined and used as a second direction in the following description and the appended claims. In more detail, around the downstream end and at the lower part of the first conveyor belt 5, a lower part mount 13 is provided. And, the lower part mount 13 is provided with a support member 15 directed to the Z-axis direction. By a guide member 17 standing preferably in the Z-axis direction on the support member 15, an up-and-down slider 19 is supported in a way of being capable of moving up and down. The up-and-down slider 19 is provided with an up-and-down operation device 21 for moving the up-and-down slider 19 up and down.

Specifically, the up-and-down slider 19 is provided with a rack 23 in the vertical direction and in mesh with this rack 23 is a pinion 25 rotated by a motor M1 such as a servomotor attached to the lower part mount 13. Therefore, by forwardly or reversely rotating the servomotor M1, the up-and-down slider 19 is moved up or down in the second direction. In the meantime, as the constitution of the up-and-down operation device 21, it is not limited to the combination of the rack and pinion or such, and a constitution by a hydraulic cylinder for instance is possible.

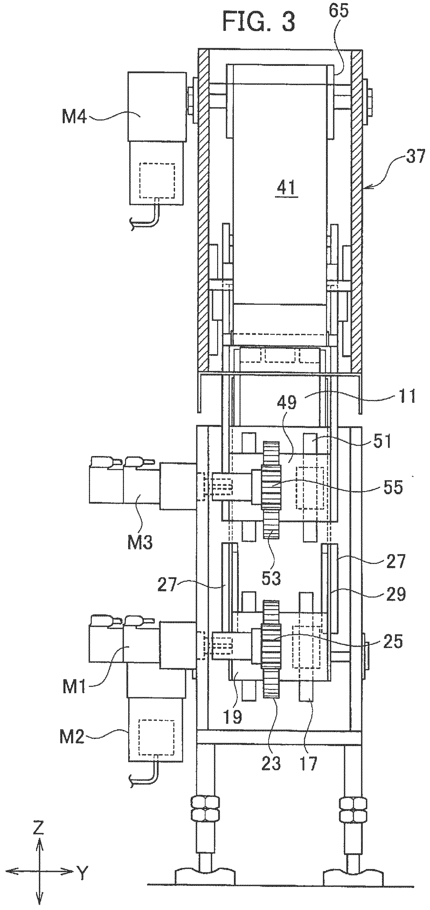

To the up-and-down slider 19 unitarily attached are lower end sections of a pair of arm members 29 in the vertical direction, which pass through slots 27 elongated in the vertical direction (see FIG. 3) formed apart in the Y-axis direction on the support member 15. On upper end sections of the arm members 29 provided is an idler 31 elongated in the Y-axis direction in a way of being rotatable. More specifically, the idler 31 is a movable shaft following the slider 19 and then moving up and down in the second direction. Further, around the idler 31 passed is the second conveyor belt 11 of an endless type. Any motor is not required to drive the idler 31 but any driving means may be connected to the idler 31 for the purpose of applying tension force to the second conveyor belt or so for instance.

The second conveyor belt 11 acts to, when a conveying leading end side of the food dough 7 conveyed by the first conveyor belt 5 comes in contact therewith, curve upward and take up the conveying leading end side. The lower part mount 13 is provided with a motor M2 such as a servomotor rotatable in a constant speed and a driving pulley 33 rotatable thereby, and the second conveyor belt 11 is passed around the driving pulley 33. The driving pulley 33 along with the motor M2 is a fixed shaft. The second conveyor belt 11 is turned around and passed around both a driven pulley 35A provided at an upper position of the driving pulley 33 and a driven pulley 35B provided on the arm members 29. More specifically, the second conveyor belt 11 follows rotation of the driving pulley 33 to move, and the idler 31 and the driven pulleys 35A, 35B follow movement of the second conveyor belt 11 to rotate.

By the aforementioned constitution, the second conveyor belt 11 can be raised and sunk in the second direction relative to the downstream end of the first conveyor belt 5 by operation of the up-and-down operation device 21. Then, in a state where the second conveyor belt 11 rotates in a constant speed in a clockwise direction in FIG. 1, the speed of the part of the second conveyor belt 11 moving up and down relative to the first conveyor belt 5 is kept constant even though the arm members 29 are moved up and down. The relative speed of the second conveyor belt 11 relative to the first conveyor belt 5 is determined by the rotation speed of the driving pulley 33 that is a fixed shaft and is not affected by the up-and-down movement of the idler 31. Ability of making the relative speed be constant prevents the food dough 7 from being stretched or loosened, thereby being beneficial in stabilizing the shape of the rolled food and improving its beauty.

On the frame mount 3, an upper mount 37 is provided. On the upstream side (the left side in FIG. 1) of the upper mount 37 provided is a detection sensor 39 for optically detecting the food dough 7 being conveyed by the first conveyor belt 5. When the detection sensor 39 detects the conveying leading end section of the food dough 7 being conveyed by the first conveyor belt 5, the second conveyor belt 11 in a state of sinking lower than the first conveyor belt 5 is moved up under the control by a control device 40.

Accordingly, when the food dough 7 is detected by the detection sensor 39, the second conveyor belt 11 is rotated clockwise in FIG. 1 by the motor M2. Further, by operation of the up-and-down operation device 21, the upper end sections of the arm members 29 are projected from the first conveyor belt 5. Thus the conveying leading end side of the food dough 7 conveyed by the first conveyor belt 5 is brought into contact with the second conveyor belt 11 and taken upward. More specifically, the conveying leading end side of the food dough 7 is curved upward and taken up by the second conveyor belt 11, thereby becoming rolled up around the core 9 laid thereon for instance.

The upper mount 37 is provided with upper holding members for holding from above the conveying leading end side of the food dough 7 being curved and taken upward, as described already, and reliably executing rolling the food dough 7 together with the core 9 or rolling up the leading end side of the food dough 7, which are arranged along the first conveyor belt 5 and movable up-and-downward, and are preferably substantially in parallel with the first conveyor belt 5. An example of the upper holding members is an upper conveyor belt 41.

In more detail, an internal face, facing in the Y-axis direction, of the upper mount 37 is provided with a guide member 43 in the vertical direction directed in the Z-axis direction. And, by the guide member 43 guided and supported is an elevator frame body 45. The elevator frame body 45 is provided with a pair of leg portions 47 elongated downward at both sides in the Y-axis direction of the first conveyor belt 5. Between the leg portions 47 unitarily provided is an up-and-down slider 49. This up-and-down slider 49 is guided in a way of being movable upward and downward by a guide member 51 directed in the Z-axis direction of the vertical direction provided on the support member 15.

The up-and-down slider 49 is, in order to move the elevator frame body 45 upward and downward, provided with a rack 53 in the vertical direction as an example of an up-and-down operation device. And, in mesh with the rack 53 is a pinion 55 rotated by a motor M3 such as a servomotor attached to the lower mount 13. Therefore, by controlling rotation of the motor M3 by the control device 40, the elevator frame body 45 can be moved upward and downward.

Below the elevator frame body 45, as being arranged along or in parallel with the first conveyor belt 5, a guide plate 57 is provided horizontally. At one end side (the left end side in FIG. 1) and another end side (the right end side in FIG. 1) in the X-axis direction of the guide plate 57, driven pulleys 59A, 59B are provided respectively. The driven pulley 59B is a driven pulley at the downstream end side and is disposed at a downstream position (the right side in FIG. 1) relative to the downstream end position (the right end position in FIG. 1) of the first conveyor belt 5 and disposed above the second conveyor belt 11.

To pass the upper conveyor belt 41 around the driven pulleys 59A, 59B, a driven pulley 61 is provided above the elevator frame body 45. And, to turn around the upper conveyor belt 41 passed around the driven pulley 61, in the upper mount 37, below the driven pulley 61, a driven pulley 63 is provided. The upper conveyor belt 41 passed around the driven pulleys 59A, 59B, 61, 63 is passed around the driving pulley 65 rotated by a motor M4 such as a servomotor attached to the upper mount 37. Further, the upper conveyor belt 41 is, above the elevator frame body 45, passed around driven pulleys 67, 69 provided on the upper mount 37.

In accordance with the aforementioned constitution, by operation of the motor M4, the upper conveyor belt 41 can be rotated clockwise in FIG. 1. The direction of movement of a horizontal part of the upper conveyor belt 41 brought into contact with the food dough 7 is the leftward direction in FIG. 1 and the direction of movement of a part of the first conveyor belt 5 brought into contact with the food dough 7 is the rightward direction in FIG. 1. In sum, they are directed counter to each other. More specifically, the upper conveyor belt 41 is a counter belt moving counter to the first conveyor belt 5. Therefore, as described already, as the conveying leading end side of the food dough 7 is taken upward by the second conveyor belt 11, for instance in a state where it curves as it is to be rolled up around the core 9, the upper conveyor belt 41 is moved down and brought into contact with the food dough 7 from above. The food dough 7 is guided along the upper conveyor belt 41 and thereby being rolled up around the core 9. To move the upper conveyor belt 41 counter to the first conveyor belt 5 promotes the food dough 7 to be rolled up around the core 9. It surely enables the food dough 7 to be rolled up around the core 9.

And, by rolling up the food dough 7 around the core 9, the number of turns of the food dough 7 as a food product 71 increases and it grows larger in diameter. Therefore, by gradually shifting the upper conveyor belt 41 upward in accordance with increase in the thickness of the food dough 7, roll forming is enabled without pressing the rolled core 9. Even in a case where the core 9 is soft for instance, thus it can be prevented from being squeezed out from both sides and the food dough 7 can be rolled without any gap in each turn.

In other words, the food product 71 is made up without squeezing the core 9 out and rolled up under proper force to keep substantially no gap in the food product 7. As being understood already, if the core 9 is unused and only the food product 7 is rolled, it also enables rolling with substantially no gap in the food dough 7.

In this embodiment, however, the description has been given about a case where the upper conveyor belt 41 is used as an example of the upper holding members. As the upper holding members, however, it may be constituted so that, without providing a conveyor belt, a plurality of small-diameter rollers is arranged at the position of the guide plate 57 in parallel and in a way of being rotatable. In this case, it is preferable to guide the food dough 7 into a rolled state by drivingly rotating the plurality of rollers by a motor. Nevertheless they are not necessarily driven to rotate and they may be constituted so as to be brought into contact with the food dough 7 rolled up by the first conveyor belt 5 and the second conveyor belt 11 and thereby passively rotate.

As described already, to convey the rolled food product 71 to the subsequent step, downstream relative to the first conveyor belt 5, a third conveyor belt 73 is provided. The third conveyor belt 73 is so provided as to interpose the second conveyor belt 11 and be opposed to the first conveyor belt 5 beyond the second conveyor belt 11 (at the right side in FIG. 1). The third conveyor belt 73 is passed around a driving pulley 75 rotated by a motor M5 such as a servomotor attached to a part 3A of the frame mount 3. Further, the third conveyor belt 73 is passed around driven pulley 77, 79 provided on the part 3A of the frame mount 3 in order to convey the food product 71 moved from the first conveyor belt 5.

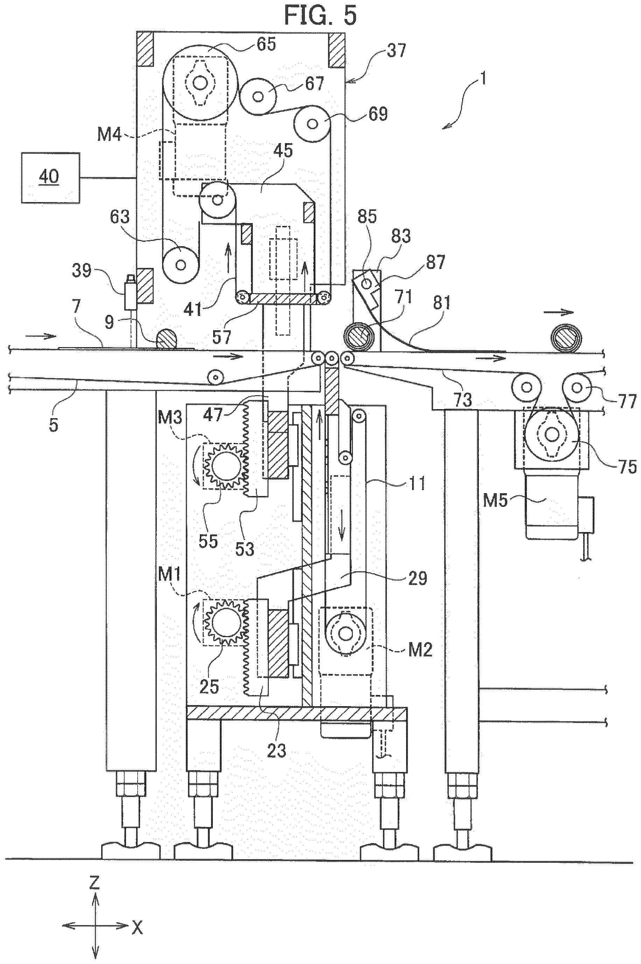

As shown in FIG. 5, to tighten the food product 71, which is transferred from the first conveyor belt 5 to the third conveyor belt 73 by moving the second conveyor belt 11 down and moving the upper conveyor belt 41 up, on the part 3A of the frame mount 3, a resilient member 81 is provided, which gets contact with the food product 71 being conveyed downstream from above to load weight thereon. More specifically, on the part 3A of the frame mount 3, a pair of struts 83 apart in the Y-axis direction from each other is set to stand. And, on a horizontal supporting bar 85 supported at both ends by the struts 83, a bracket 87 comprising a curl net as an example of the resilient member 81 is supported in a way of being swingable.

By the aforementioned constitution, the food product 71, when passing under the resilient member 81 such as the curl net, is loaded with weight of the resilient member 81 and then rolls, and thus tightening is more surely carried out.

In the meantime, the resilient member 81 is not limited to the curl net but a flat soft resin plate or a structure in which a plurality of cords is arranged in parallel. Alternatively, the resilient member 81 may be omitted.

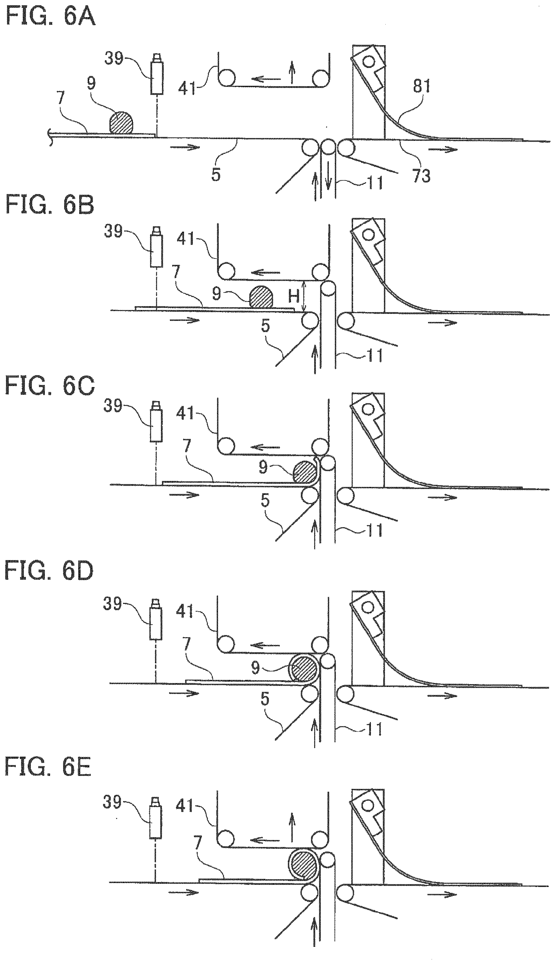

In the aforementioned constitution, as shown in FIG. 6A, in a state where the second conveyor belt 11 sinks relative to the first conveyor belt 5 and the upper conveyor belt 41 moves up, the food dough 7 with the core 9 laid thereon is conveyed downstream by the first conveyor belt 5. When the conveying leading end side of the food dough 7 is then detected by the detection sensor 39, as shown in FIG. 6B, the second conveyor belt 11 is moved upward and the upper conveyor belt 41 is moved downward.

As described already, when the upper conveyor belt 41 moves down, the space H between the first conveyor belt 5 and the upper conveyor belt 41 is kept to be an appropriate gap under control by the control device 40. More specifically, as the thickness of the food dough 7 and the dimensions (height) of the core 9 conveyed by the first conveyor belt 5 are detected by a sensor (not shown) provided at an appropriate position, a proper position of the upper conveyor belt 41 is controlled so as to keep the space H adapted for rolling up the food dough 7 around the core 9.

Meanwhile, as a method for detecting the thickness of the food dough 7, by means of a distance sensor using laser light for instance, the upper face position of the first conveyor belt 5 is detected. And, when the food dough 7 is conveyed there, the upper face position of the food dough 7 is detected thereby and any calculation means such as a computer provided in the control device 40 executes calculation to detect the thickness of the food dough 7.

Further, as a method for detecting the dimensions of the core 9, it can be calculated on the basis of the conveying speed of the first conveyor belt 5 and change in detected values by the distance sensor. In the meantime, as the core 9 is to be measured in advance so as to set proper dimensions, calculation may be carried out on the basis of the measured value.

As described already, when the second conveyor belt 11 moves up and the upper conveyor belt 41 moves to be at a proper height (see FIG. 6B), as shown in FIG. 6C, the conveying leading end side of the food dough 7 is brought into contact with the second conveyor belt 11, taken and curved upward so as to be rolled up around the core 9. And, the taken-up leading end section of the food dough 7 is brought into contact with the upper conveyor belt 41, thereby being rolled up around the core 9 as shown in FIG. 6D.

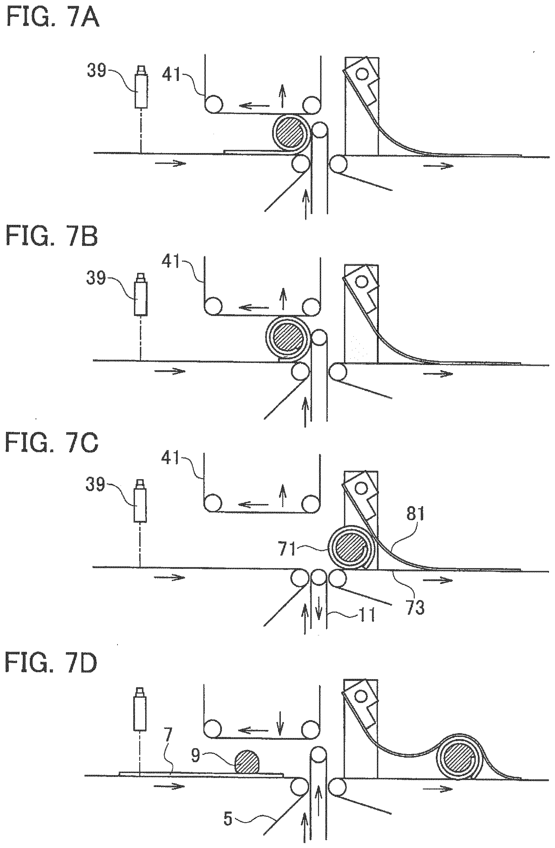

And, when the number of turns of the food dough 7 rolled up around the core 9 becomes two, as shown in FIG. 6E, the upper conveyor belt 41 is moved upward under control by the control device 40 in accordance with the thickness of the food dough 7. And, as the number of turns of the food dough 7 rolled up around the core 9 increases, the upper conveyor belt 41 is gradually moved upward as shown in FIGs. 7A, 7B.

And, as rolling up the food dough 7 around the core 9 is finished and the food product 71 is formed, as shown in FIG. 7C, the upper conveyor belt 41 is moved upward and the second conveyor belt 11 is moved downward so that the food product 71 is transferred onto the third conveyor belt 73. The food product 71 on the third conveyor belt 73 is, when conveyed downstream by the third conveyor belt 73, brought into contact with the resilient member 81 and then tightened by being conveyed with rolling.

As the food product 71 is transferred onto the third conveyor belt 73, next food dough 7 is, as shown in FIG. 7D, transferred therein and then next roll forming of the food dough 7 is executed.

As being understood from the above description, when the food dough 7 is rolled and formed, the first conveyor belt 5, the second conveyor belt 11 and the upper conveyor belt 41 disposed along the first conveyor belt 5, parts of which contacting the food dough 7 are in a state of being perpendicular to each other, work in cooperation to execute roll forming. Here, the speed of movement of the first conveyor belt 5, the speed of movement of the second conveyor belt 11 and the speed of movement of the upper conveyor belt 41 are put in a relation where the speed of movement of the first conveyor belt 5 < the speed of movement of the second conveyor belt 11 < the speed of movement of the upper conveyor belt 41, under control by the control device 40.

Therefore, at a time of executing roll forming of the food product 71 as described above, the food dough 7 is prevented from loosening and thus the food shape after the roll forming becomes stable. More specifically, as described already, when the conveying leading end side of the food dough 7 on the first conveyor belt 5 is brought into contact with the second conveyor belt 11, it gets into a shape where the second conveyor belt 11 draws the conveying leading end side so that the food dough 7 is prevented from loosening. It is also the case where contact with the second conveyor belt 11 is transferred to contact with the upper conveyor belt 41.

As being understood already, as the roll forming of the food dough 7 is carried out with retaining the relation of the speed of movement of the first conveyor belt 5 < the speed of movement of the second conveyor belt 11 < the speed of movement of the upper conveyor belt 41, the food dough 7 comes into a state where it is drawn between the first conveyor belt 5 and the second conveyor belt 11 and as well between the second conveyor belt 11 and the upper conveyor belt 41, thereby preventing the rolled food from loosening.

On the other hand, when the upper conveyor belt 41 is moved upward in accordance with the number of turns of the food dough 7 under control by the control device 40, the number of turns of the food dough 7 can be calculated by the calculation means provided in the control device 40 on the basis of the conveying speed of the first conveyor belt 5. More specifically, as the distance from the detection sensor 39 to the second conveyor belt 11 is already known, the time elapsed since the food dough passes the position of the detection sensor 39 before starting rolling can be calculated by the calculation means. And, based on the dimensions of the core 9, the thickness of the food dough 7 and the conveying speed of the first conveyor belt 5, the number of turns of the food dough 7 around the core 9 can be calculated by the calculation means.

In other words, it can know the relation between the time elapsed since the food dough 7 passes the position of the detection sensor 39 and the number of turns of the food dough 7 by calculation. Therefore, the upper conveyor belt 41 can be moved upward in accordance with the number of turns of the food dough 7. Thus the roll forming without pressure onto the core 9 and formation of any gap in the food dough 7 can be executed.

By the way, while the second conveyor belt 11 is moved up and down, it rotates in a constant speed. Therefore speed change of the second conveyor belt 11 relative to the food dough 7 originated from the up-and-down movement would not occur. Thus any furrows originated from the relative speed change for instance on the food dough 7 can be prevented.

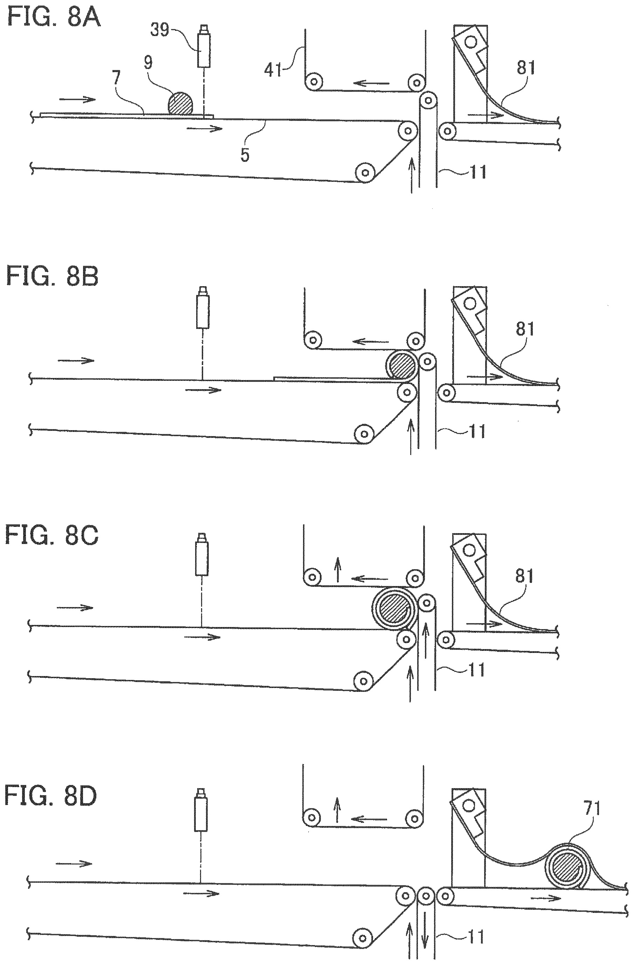

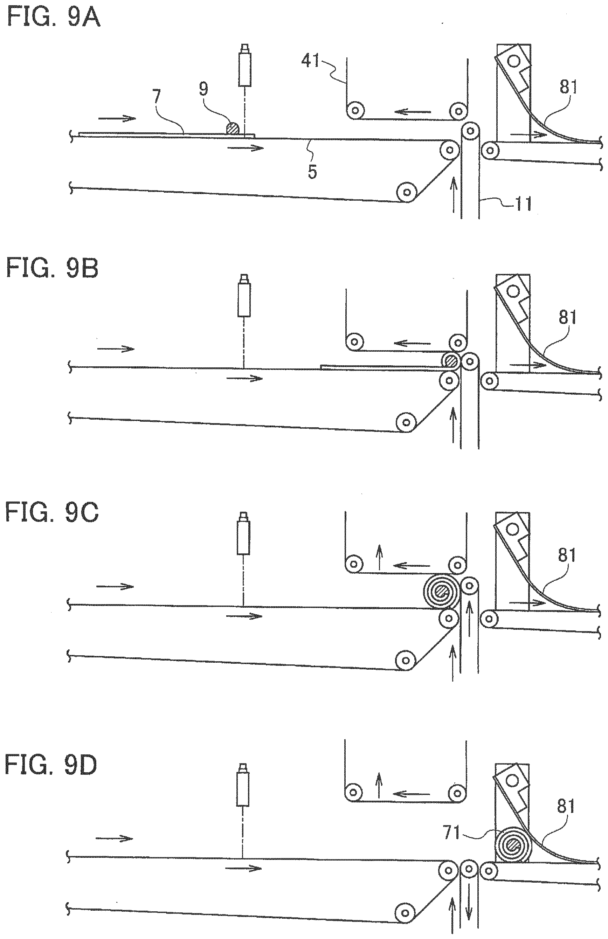

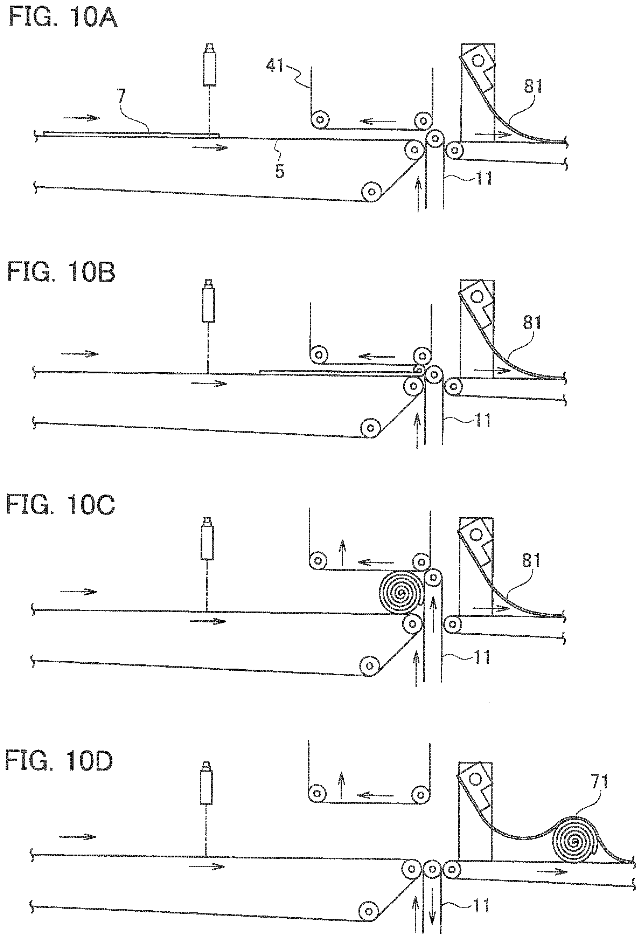

As being understood already, as the height position of the upper conveyor belt 41 relative to the first conveyor belt 5 is adjustable, as shown in FIG. 8, FIG. 9 and FIG. 10, it is readily adaptable to various shapes of the food product 71. More specifically, it is readily adaptable to various cases with a variety of the dimensions of the core 9 and a variety of the number of turns of the food dough 7, such as a case, as shown in FIG. 8, where the core 9 is relatively large and the number of turns of the food dough 7 is two for instance, or a case, as shown in FIG. 9, where the core 9 is relatively small and the number of turns of the food dough 7 is three for instance. Further, it is adaptable to a case where the core 9 is not laid on the food dough 7 and only the food dough 7 is rolled up as shown in FIG. 10.

In the meantime, the diameter of the food product 71 changes in accordance with the dimensions of the core 9, the thickness of the food dough 7 and the number of turns of the food dough 7. As diameter increase by each turn of the food dough 7 can be in advance calculated, even in a case where the diameter of the food product 71 changes variously, however, it can execute roll forming of the food product 71 in a state where the core 9 is prevented from being squeezed out although the gap in the food dough 7 therearound is suppressed, in other words, any gap is precluded, under proper applied force.

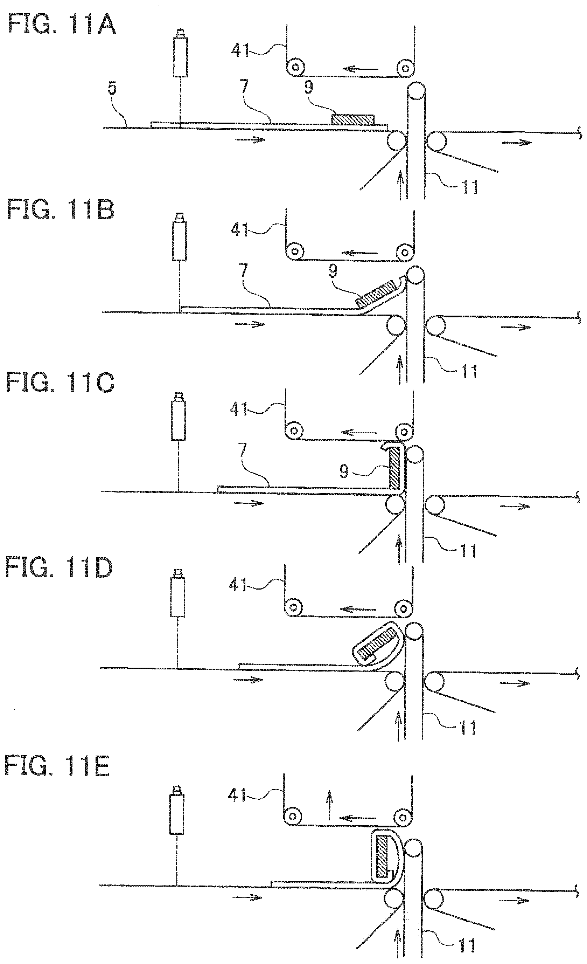

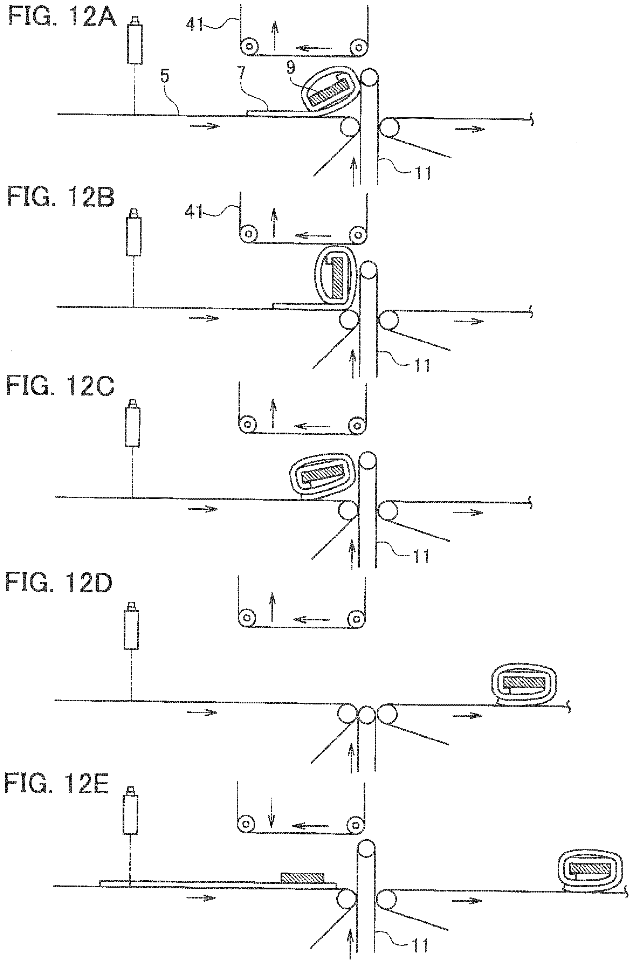

By the way, the above descriptions are given about a case where the core 9 is soft. The core 9, however, has many variations and may be hard. More specifically, as shown in FIG. 11 and FIG. 12, a tablet of chocolate for instance is applicable to the core 9. Even in this case, it is possible to carry out roll forming of the food product with suppressing a gap in the food dough 7 rolled up therearound. Further, any hard bar-like food is applicable to the core 9. And, in a case of a hollow food from which a core is drawn out after baking the food dough 7, any article other than food, such as metal or ceramic, is applicable to the core 9.

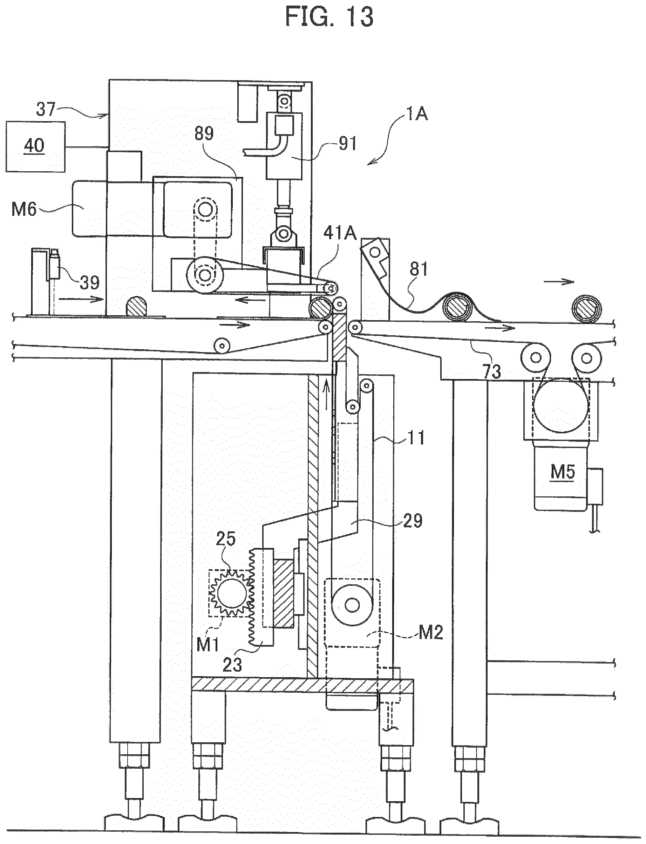

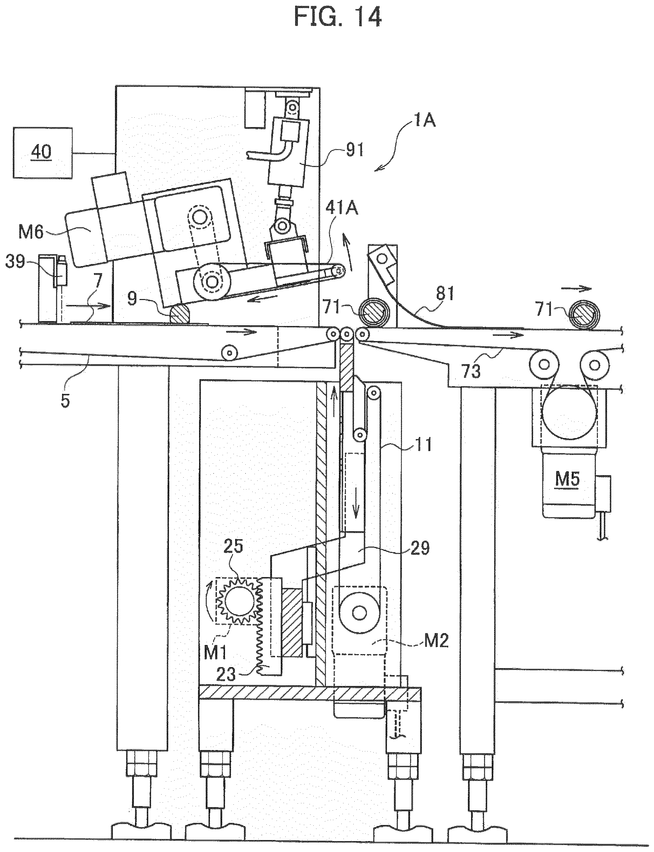

FIGs. 13, 14 show a food product production device according to a second embodiment. In the food product production device 1A according to the second embodiment, to constitutional elements creating the same functions as those in the food product production device 1 described above, the same reference signs are attached and redundant descriptions will be omitted.

The food product production device 1A of the second embodiment is provided with a swingable frame body 89 on the upper mount 37 in a way of being swingable up and down. And, it is provided with an upper conveyor belt 41A rotated by a motor M6 attached to the swingable frame body 89. This upper conveyor belt 41A creates the same function as the aforementioned conveyor belt 41. And, the upper mount 37 is provided with a hydraulic cylinder 91 for swinging the swingable frame body 89 up and down.

When the upper conveyor belt 41 swings downward to bring its lower face into contact with the food dough 7 and roll up it around, as shown in FIG. 13, the upper conveyor belt 41 may be set to be substantially parallel with the first conveyor belt 5. After finishing roll forming, the upper conveyor belt 41 may be swung upward as shown in FIG. 14, and the second conveyor belt 11 sinks down so that the rolled food dough 7 is conveyed downstream by the first conveyor belt 5.

The aforementioned food product production device 1A can create the same effects as the food product production device 1.

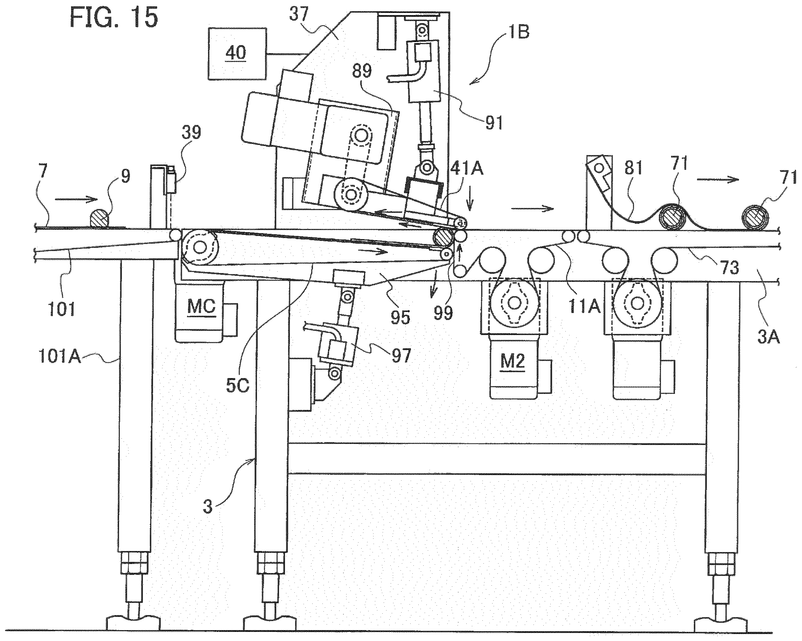

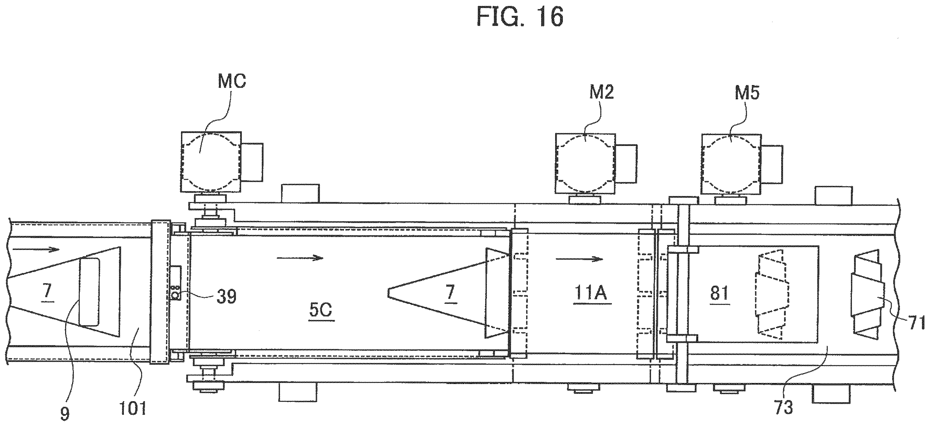

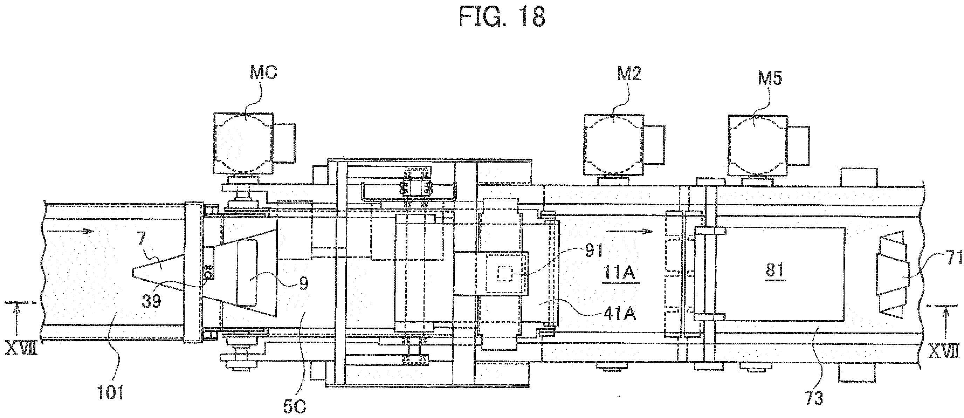

FIG. 15 through FIG. 20 show a food product production device according to a modified embodiment for rolling up a flat food dough around to produce a food product in a rolled columnar shape. In the food product production device 1B of the modified embodiment, to constitutional elements creating the same functions as those in the aforementioned embodiments, the same reference signs are attached and redundant descriptions will be omitted.

The aforementioned descriptions have been given about cases where the second conveyor belts 11 rise and sink relative to the first conveyor belts 5 in the food product production devices 1, 1A of the embodiments. However, a constitution is relative if, relative to one conveyor belt 5, another conveyor belt 11 moves up and down, an alternative embodiment is possible, in which one conveyor belt 5 moves up and down relative to another conveyor belt 11. Thus to the food product production device 1B applied is a constitution where one conveyor belt 5 moves up and down.

In more detail, the food product production device 1B is provided with a first conveyor belt 5C corresponding to the first conveyor belt 5 in the above embodiments in a way of being swingable up and down. More specifically, the first conveyor belt 5C is supported by a swinging frame 95 provided on the frame mount 3 in a way of being movable up and down. This swinging frame 95 has a constitution in which a downstream end side (the right end side in FIG. 15) viewed from the conveying direction of the food dough 7 moves up and down. Meanwhile the first conveyor belt 5C is driven to run by a motor MC such as a servomotor attached to the frame mount 3. Further, the swinging frame 95 is made to swing up and down by a proper swinging operation device 97 such as a hydraulic cylinder attached to the frame mount 3.

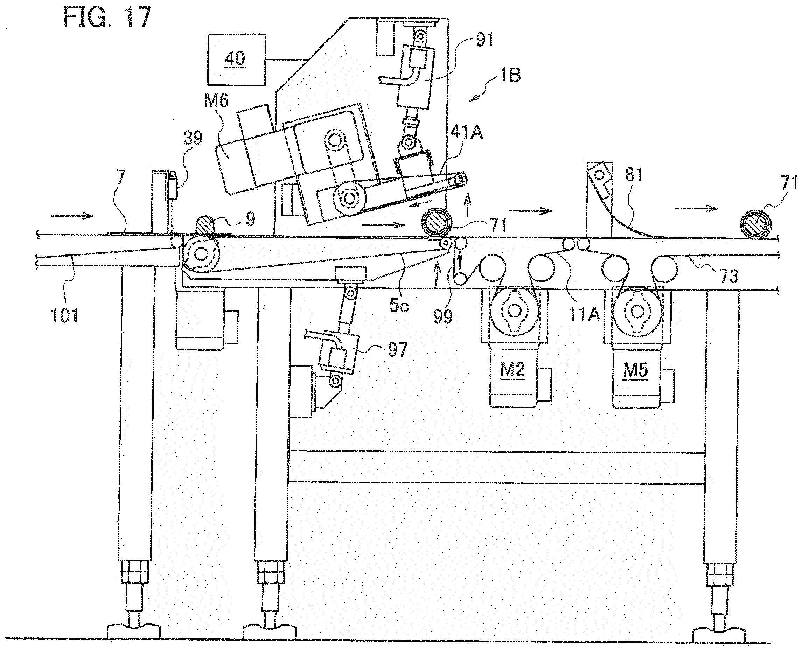

In between the first conveyor belt 5C and the third conveyor belt 73 provided is a second conveyor belt 11A in place of the second conveyor belt 11. This second conveyor belt 11A is provided on the part 3A of the frame mount 3 as with the third conveyor belt 73. And, at the point where the second conveyor belt 11A opposes a downstream end side of the first conveyor belt 5C that swings up and down, a take-up operation section 99 that curves and takes up the conveying leading end side of the food dough 7 when the conveying leading end side is brought into contact therewith is provided and directed in the second direction. This second conveyor belt 11A is made to run by the motor M2 attached to the frame mount 3. The direction of the take-up operation section 99 is perpendicular to the first direction in a state shown in FIG. 17 for instance where the first conveyor belt 5C swings up, and the take-up operation section 99, by swinging the first conveyor belt 5C, rises and sinks in the second direction relative to the first conveyor belt 5C. Respective pulleys related to the take-up operation section 99 are fixed shafts relative to the part 3A of the mount 3 but are movable shafts relative to the first conveyor belt 5C. By properly regulating the rotation of the motor M2, the speed relative to the food dough 7 can be regulated to be constant even how the take-up operation section 99 relatively rises or sinks.

To transfer the food dough 7 into the first conveyor belt 5C, upstream relative to the first conveyor belt 5C, a transfer-in conveyor belt 101 is provided. And, on a conveyor frame 101F of the transfer-in conveyor belt 101 provided is the detection sensor 39.

Above the first conveyor belt 5C provided is the upper mount 37. On this upper mount 37 provided are, as with the second embodiment, the swingable frame body 89, the upper conveyor belt 41A and the hydraulic cylinder 91.

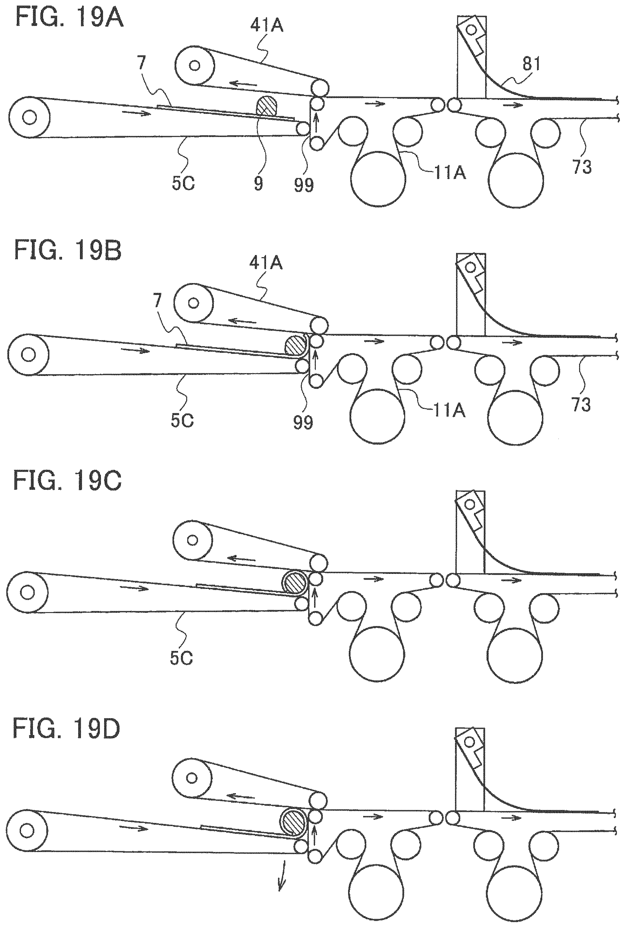

In the aforementioned constitution, when the food dough 7 is transferred into the first conveyor belt 5C by the transfer-in conveyor 101 in order to carry out roll forming of the food dough 7, detection of the food dough 7 is executed by the detection sensor 39. When the food dough 7 is detected by the detection sensor 39, the downstream end side of the first conveyor belt 5C is moved down and the upper conveyor belt 41A is moved down (see FIG. 19A).

Then the upper conveyor belt 41A is moved down to a predetermined height position above the second conveyor belt 11A. And, a gap in the vertical direction between the first conveyor belt 5C and the upper conveyor belt 41A is kept to be a proper gap adapted for carrying out roll forming of the food dough 7. More specifically, control of the gap is carried out in accordance with the thickness of the food dough 7 and the dimensions of the core 9. Then, as with the first embodiment, the upper face of the first conveyor belt 5C can be made to be substantially parallel to the lower face of the upper conveyor belt 41A and substantially perpendicular to the second direction where the take-up operation section 99 runs.

After the food dough 7 is conveyed by the first conveyor belt 5C and the conveying leading end side of the food dough 7 is brought into contact with the take-up operation section 99 of the second conveyor belt 11 (FIG. 19B), the conveying leading end side is taken up and brought into contact with the upper conveyor belt 41A. Therefore the food dough 7 is rolled up and formed under cooperation of the first conveyor belt 5C, the take-up operation section 99 of the second conveyor belt 11A and the upper conveyor belt 41A (FIG. 19C).

And, as the number of turns of the food dough 7 gradually increase, the first conveyor belt 5C is gradually moved down in accordance with the thickness of the food dough 7 (FIG. 19D - FIG. 20B). Therefore, as with the aforementioned embodiments, the core 9 can be prevented from being squeezed out from both sides of the food product 17 and the food dough 7 can be rolled up without any gap in each turn.

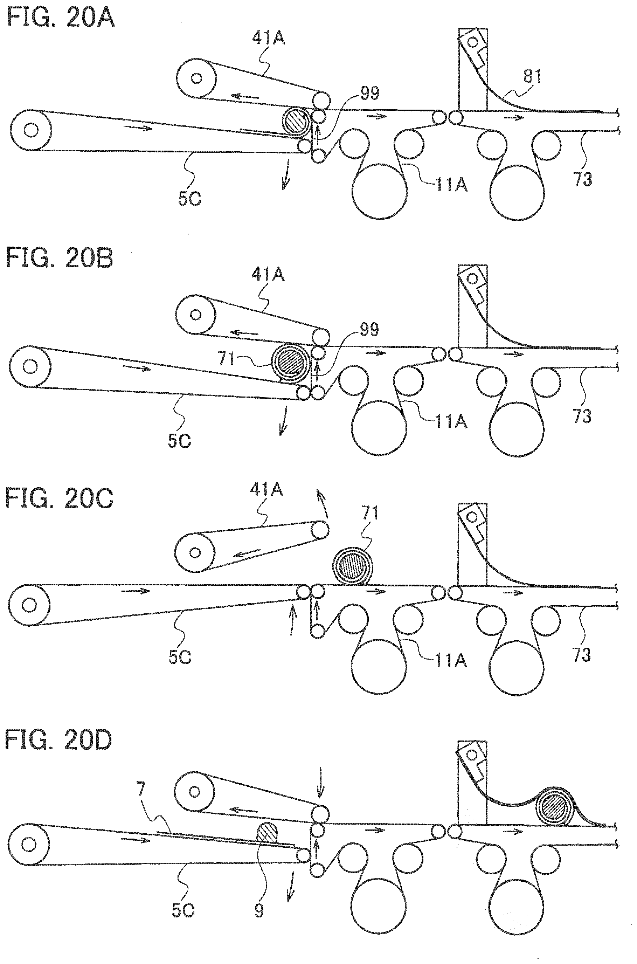

When roll forming as described above is carried out, the first conveyor belt 5C and the upper conveyor belt 41A are moved up. And, the food product 71 is transferred out to the second conveyor belt 11A (FIG. 17, FIG. 20C). Subsequently, next food dough 7 is transferred onto the first conveyor belt 5C and then roll forming is carried out on the next food dough 7 (FIG. 15, FIG. 19A, FIG. 20D).

By the way, as described already, when the first conveyor belt 5C is moved up and the food product 71 is transferred out onto the second conveyor belt 11A, it is desired to slightly increase the speed of the second conveyor belt 11A so as to prevent slippage originated from relative speed change between the food product 71 and the take-up operation section 99 in the second conveyor belt 11A.

More specifically, the food product production device 1B can create the same effects as those of the aforementioned food product production devices.

As being understood from the above descriptions, when the conveying leading end side of the food dough conveyed by the first conveyor belt is curved upward and then rolled, the food dough is pressed from above by the upper conveyor belt. And, in accordance with the number of turns of the food dough, the gap between the first conveyor belt and the upper conveyor belt is properly regulated.

Therefore roll forming can be executed without squeezing the core out from both sides of the food product where the food dough is rolled up and yet without creating any gap in the food dough rolled up.

Although certain embodiments have been described above, modifications and variations of the embodiments described above will occur to those skilled in the art, in light of the above teachings.

### INDUSTRIAL APPLICABILITY

A method and a device for producing a rolled food is provided, which do not cause any issue in a sense of beauty even if food dough is rolled around or without semiliquid or semisolid filling such as jam or cream and do not cause the filling to be squeezed out.

## Claims

1. A method for rolling up flat dough (7) around or without a filling (9) to produce a rolled food product (71), comprising:
(a) laying and conveying the dough (7) with or without the filling (9) onto a first belt (5) having an end and moving in a first direction toward the end;
(b) bringing the dough (7) on the first belt (5) into contact with a second belt (11) being adjacent to the end and movable in a second direction, wherein the second direction is a vertical direction and is perpendicular to the first direction to curve the dough (7);
(c) guiding the dough (7) curved along the second belt (11) around along holding members (41; 57; 59A; 59B) arranged along the first belt (5), whereby rolling up the dough (7); and
(d) shifting the holding members (41; 57; 59A; 59B) in the second direction in accordance with increase in a number of turns of the dough (7),
the method being **characterized by** further comprising:
passing the second belt (11) around a driving pulley (33) pivoted on a fixed shaft and an idler (31) pivoted on a movable shaft movable in the second direction, the driving pulley (33) being rotatable at a constant speed and the idler (31) being rotatable in accordance with the second belt (11), and moving the idler (31) in the second direction with rotating the driving pulley (33) at the constant speed, whereby moving the second belt (11) at the constant speed without influence by movement of the idler (31).

2. The method of claim 1, further comprising:
bringing a counter belt (41) passed around the holding members (41; 57; 59A; 59B) into contact with the dough (7) curved along the second belt (11) and moving the counter belt (41) in a direction opposite to the first direction, wherein a moving speed of the first belt (5) is smaller than a moving speed of the second belt (11) and the moving speed of the second belt (11) is smaller than a moving speed of the counter belt (41).

3. The method of claim 2, further comprising:
moving the counter belt (41) in the second direction with keeping parallelism with the first belt (5).

4. The method of claim 1, further comprising:
putting the dough (7) between a third belt (73) and a resilient member (81) hung over the third belt (73), the third belt (73) being disposed adjacent in the first direction to the first belt (5) so as to have the second belt (11) between the first belt (5) and the third belt (73) and moving in a direction identical to the first direction, whereby tightening the rolled dough (7).

5. A device (1) for rolling up flat dough (7) around or without a filling (9) to produce a rolled food product (71), comprising:
a first belt (5) having an end and moving in a first direction toward the end to convey the dough (7) with or without the filling (9) laid on the first belt (5);
a second belt (11) so disposed adjacent to the end as to make the dough (7) conveyed in the first direction be brought into contact with the second belt (11) to curve the dough (7) and movable in a second direction, wherein the second direction is a vertical direction and is perpendicular to the first direction; and
holding members (41; 57; 59A; 59B) arranged along the first belt (5) to guide the dough (7) curved along the second belt (11) around along the holding members (41; 57; 59A; 59B), whereby rolling up the dough (7),
the device (1) being **characterized by** further comprising:
a driving pulley (33) pivoted on a fixed shaft, the driving pulley (33) being rotatable at a constant speed; and
an idler (31) pivoted on a movable shaft movable in the second direction, the idler (31) being rotatable in accordance with the second belt (11),
wherein the second belt (11) is passed around the driving pulley (33) and the idler (31),
whereby the second belt (11) moves at the constant speed without influence by movement of the idler (31).

6. The device (1) of claim 5, wherein the holding members (41; 57; 59A; 59B) comprise a counter belt (41) being so disposed as to have contact with the dough (7) curved along the second belt (11) and moving in a direction opposite to the first direction, wherein a moving speed of the first belt (5) is smaller than a moving speed of the second belt (11) and the moving speed of the second belt (11) is smaller than a moving speed of the counter belt (41).

7. The device (1) of claim 6, further comprising:
a mechanism (43; 45) moving the counter belt (41) in the second direction with keeping parallelism with the first belt (5).

8. The device (1) of claim 5, further comprising:
a third belt (73) disposed adjacent in the first direction to the first belt (5) so as to have the second belt (11) between the first belt (5) and the third belt (73) and moving in a direction identical to the first direction;
a resilient member (81) hung over the third belt (73) and disposed as to put the dough (7) between the third belt (73) and the resilient member (81), whereby tightening the rolled dough (7).

## Patentansprüche

1. Verfahren zum Aufrollen von flachem Teig (7) um eine Füllung (9) herum oder ohne diese, um so ein gerolltes Lebensmittelerzeugnis (71) herzustellen, umfassend:
a) Legen und Transportieren des Teigs (7) mit oder ohne die Füllung (9) auf ein erstes Band (5), das ein Ende hat und sich in einer ersten Richtung auf das Ende zu bewegt;
(b) Herstellen von Kontakt des Teigs (7) auf dem ersten Band (5) mit einem zweiten Band (11), das an das Ende angrenzt und in einer zweiten Richtung bewegt werden kann, wobei die zweite Richtung eine vertikale Richtung ist und senkrecht zu der ersten Richtung verläuft, und so der Teig (7) gekrümmt wird;
(c) Führen des entlang des zweiten Bandes (11) gekrümmten Teigs (7) um Halteelemente (41; 57; 59A; 59B) herum, die entlang des ersten Bandes (5) angeordnet sind, so dass der Teig (7) aufgerollt wird; und
d) Verschieben der Halteelemente (41; 57; 59A; 59B) in der zweiten Richtung entsprechend einer zunehmenden Anzahl von Wicklungen des Teigs (7),
wobei das Verfahren **dadurch gekennzeichnet ist, dass** es des Weiteren umfasst:
Leiten des zweiten Bandes (11) um eine Antriebsrolle (33), die an einer festen Welle drehbar gelagert ist, und um eine Laufrolle (31) herum, die an einer beweglichen Welle drehbar gelagert ist, die in der zweiten Richtung bewegt werden kann, wobei die Antriebsrolle (33) mit einer konstanten Geschwindigkeit gedreht werden kann und die Laufrolle (31) in Übereinstimmung mit dem zweiten Band (11) gedreht werden kann, und Bewegen der Laufrolle (31) in der zweiten Richtung mit Drehen der Antriebsrolle (33) mit der konstanten Geschwindigkeit, so dass das zweite Band (11) ohne Einfluss durch Bewegung der Laufrolle (31) mit der konstanten Geschwindigkeit bewegt wird.

2. Verfahren nach Anspruch 1, des Weiteren umfassend:
Herstellen von Kontakt eines um die Halteelemente (41; 57; 59A; 59B) geleiteten Gegenbandes (41) mit dem entlang des zweiten Bandes (11) gekrümmten Teig (7) und Bewegen des Gegenbandes (41) in einer der ersten Richtung entgegengesetzten Richtung, wobei eine Bewegungsgeschwindigkeit des ersten Bandes (5) niedriger ist als eine Bewegungsgeschwindigkeit des zweiten Bandes (11) und die Bewegungsgeschwindigkeit des zweiten Bandes (11) niedriger ist als eine Bewegungsgeschwindigkeit des Gegenbandes (41).

3. Verfahren nach Anspruch 2, des Weiteren umfassend:
Bewegen des Gegenbandes (41) in der zweiten Richtung unter Beibehaltung von Parallelität mit dem ersten Band (5).

4. Verfahren nach Anspruch 1, des Weiteren umfassend:
Legen des Teigs (7) zwischen ein drittes Band (73) und ein über dem dritten Band (73) hängendes elastisches Element (81), wobei das dritte Band (73) in der ersten Richtung an das erste Band (5) angrenzend angeordnet ist, so dass sich das zweite Band (11) zwischen dem ersten Band (5) und dem dritten Band (73) befindet und sich in einer Richtung bewegt, die identisch mit der ersten Richtung ist, und dadurch der gerollte Teig (7) gespannt wird.

5. Vorrichtung (1) zum Aufrollen von flachem Teig (7) um eine Füllung (9) herum oder ohne diese, um so ein gerolltes Lebensmittelerzeugnis (71) herzustellen, umfassend:
ein erstes Band (5), das ein Ende hat und sich in einer ersten Richtung auf das Ende zu bewegt, um den Teig (7) mit oder ohne die Füllung (9) auf das erste Band (5) aufgelegt zu transportieren;
ein zweites Band (11), das so an das Ende angrenzend angeordnet ist, dass der in der ersten Richtung transportierte Teig (7) mit dem zweiten Band (11) in Kontakt gebracht wird und so der Teig (7) gekrümmt wird, und das in einer zweiten Richtung bewegt werden kann, wobei die zweite Richtung eine vertikale Richtung ist und senkrecht zu der ersten Richtung verläuft; sowie
Halteelemente (41; 57; 59A; 59B), die entlang des ersten Bandes (5) angeordnet sind, um den entlang des zweiten Bandes (11) gekrümmten Teig (7), um die Halteelemente (41; 57; 59A; 59B) herum zu führen, so dass der Teig (7) aufgerollt wird,
wobei die Vorrichtung (1) **dadurch gekennzeichnet ist, dass** sie des Weiteren umfasst:
eine Antriebsrolle (33), die an einer festen Welle drehbar gelagert ist, wobei die Antriebsrolle (33) mit einer konstanten Geschwindigkeit gedreht werden kann; sowie eine Laufrolle (31), die an einer beweglichen Welle drehbar gelagert ist, die in der zweiten Richtung bewegt werden kann, wobei die Laufrolle (31) in Übereinstimmung mit dem zweiten Band (11) gedreht werden kann,
wobei das zweite Band (11) um die Antriebsrolle (33) und die Laufrolle (31) herum geleitet wird, so dass sich das zweite Band (11) ohne Einfluss durch Bewegung der Laufrolle (31) mit der konstanten Geschwindigkeit bewegt.

6. Vorrichtung (1) nach Anspruch 5, wobei die Halteelemente (41; 57; 59A; 59B) ein Gegenband (41) umfassen, das so angeordnet ist, dass es Kontakt mit dem entlang des zweiten Bandes (11) gekrümmten Teig (41) hat und sich in einer der ersten Richtung entgegengesetzten Richtung bewegt, wobei eine Bewegungsgeschwindigkeit des ersten Bandes (5) niedriger ist als eine Bewegungsgeschwindigkeit des zweiten Bandes (11) und die Bewegungsgeschwindigkeit des zweiten Bandes (11) niedriger ist als eine Bewegungsgeschwindigkeit des Gegenbandes (41).

7. Vorrichtung (1) nach Anspruch 6, des Weiteren umfassend:
einen Mechanismus (43; 45), der das Gegenband (41) unter Beibehaltung von Parallelität mit dem ersten Band (5) in der zweiten Richtung bewegt.

8. Vorrichtung (1) nach Anspruch 5, des Weiteren umfassend:
ein drittes Band (73), das in der ersten Richtung an das erste Band (5) angrenzend angeordnet ist, so dass sich das zweite Band (11) zwischen dem ersten Band (5) und dem dritten Band (73) befindet und sich in einer Richtung bewegt, die identisch mit der ersten Richtung ist;
ein elastisches Element (81), das über dem dritten Band (73) hängt und so angeordnet ist, dass es den Teig (7) zwischen das dritte Band (73) und das elastische Element (81) legt und dadurch der gerollte Teig (7) gespannt wird.

## Revendications

1. Procédé consistant à étaler une pâte (7) à plat autour d'une, ou sans, garniture (9) pour produire un produit alimentaire roulé (71), comprenant :
(a) le dépôt et le transport de la pâte (7) avec ou sans garniture (9) sur une première courroie (5) ayant une extrémité et se déplaçant dans un premier sens vers l'extrémité ;
(b) le fait de porter la pâte (7) sur la première courroie (5) en contact avec une seconde courroie (11) qui est adjacente à l'extrémité et mobile dans un second sens, où le second sens est un sens vertical et est perpendiculaire au premier sens pour incurver la pâte (7) ;
(c) le guidage de la pâte (7) incurvée le long de la seconde courroie (11) autour et le long des éléments de maintien (41 ; 57 ; 59A ; 59B) disposés le long de la première courroie (5), enroulant ainsi la pâte (7) ; et
(d) le décalage des éléments de maintien (41 ; 57 ; 59A ; 59B) dans le second sens en fonction d'une augmentation du nombre de tours de la pâte (7),
le procédé étant **caractérisé en ce qu'**il comprend en outre :
le fait de faire passer la seconde courroie (11) autour d'une poulie d'entraînement (33) qui pivote sur un arbre fixe et un galet tendeur (31) qui pivote sur un arbre mobile pouvant se déplacer dans le second sens, la poulie d'entraînement (33) pouvant tourner à une vitesse constante et le galet tendeur (31) pouvant tourner selon la seconde courroie (11), et le mouvement du galet tendeur (31) dans le second sens par rotation de la poulie d'entraînement (33) à la vitesse constante, déplaçant ainsi la seconde courroie (11) à la vitesse constante sans influence du mouvement du galet tendeur (31).

2. Procédé selon la revendication 1, comprenant en outre :
le fait de porter une contre-courroie (41) qui passe autour des éléments de maintien (41 ; 57 ; 59A ; 59B) en contact avec la pâte (7) incurvée le long de la seconde courroie (11) et le déplacement de la contre-courroie (41) dans un sens opposé au premier sens, où une vitesse de mouvement de la première courroie (5) est inférieure à une vitesse de mouvement de la seconde courroie (11) et la vitesse de mouvement de la seconde courroie (11) est inférieure à une vitesse de mouvement de la contre-courroie (41).

3. Procédé selon la revendication 2, comprenant en outre :
le déplacement de la contre-courroie (41) dans le second sens en maintenant le parallélisme avec la première courroie (5).

4. Procédé selon la revendication 1, comprenant en outre :
le fait de placer la pâte (7) entre une troisième courroie (73) et un élément résilient (81) suspendu sur la troisième courroie (73), la troisième courroie (73) étant disposée adjacente dans le premier sens à la première courroie (5) afin d'avoir la seconde courroie (11) entre la première courroie (5) et la troisième courroie (73) et le déplacement dans un sens identique au premier sens, resserrant ainsi la pâte (7) roulée.

5. Dispositif (1) destiné à étaler de la pâte (7) autour d'une, ou sans, garniture (9) pour produire un produit alimentaire roulé (71), comprenant :
une première courroie (5) ayant une extrémité et le déplacement dans un premier sens vers l'extrémité pour transporter la pâte (7) avec ou sans la garniture (9) déposée sur la première courroie (5) ;
une seconde courroie (11) disposée ainsi adjacente à l'extrémité afin de porter la pâte (7) transportée dans le premier sens en contact avec la seconde courroie (11) pour incurver la pâte (7) et mobile dans un second sens, où le second sens est un sens vertical et est perpendiculaire au premier sens ; et
des éléments de maintien (41 ; 57 ; 59A ; 59B) disposés le long de la première courroie (5) pour guider la pâte (7) incurvée le long de la seconde courroie (11) autour et le long des éléments de maintien (41 ; 57 ; 59A ; 59B), roulant la pâte (7) ainsi,
le dispositif (1) étant **caractérisé en ce qu'**il comprend en outre :
une poulie d'entraînement (33) qui pivote sur un arbre fixe, la poulie d'entraînement (33) pouvant tourner à une vitesse constante ; et
un galet tendeur (31) qui pivote sur un arbre mobile qui est mobile dans le second sens, le galet tendeur (31) pouvant tourner selon la seconde courroie (11),
où la seconde courroie (11) passe autour de la poulie d'entraînement (33) et le galet tendeur (31), moyennant quoi la seconde courroie (11) se déplace à la vitesse constante sans influence par le mouvement du galet tendeur (31).

6. Dispositif (1) selon la revendication 5, dans lequel les éléments de maintien (41 ; 57 ; 59A ; 59B) comprennent une contre-courroie (41) disposée afin de présenter un contact avec la pâte (7) incurvée le long de la seconde courroie (11) et se déplaçant dans un sens opposé au premier sens, où une vitesse de mouvement de la première courroie (5) est inférieure à une vitesse de mouvement de la seconde courroie (11) et la vitesse de mouvement de la seconde courroie (11) est inférieure à une vitesse de mouvement de la contre-courroie (41).

7. Dispositif (1) selon la revendication 6, comprenant en outre.
un mécanisme (43 ; 45) déplaçant la contre-courroie (41) dans le second sens tout en maintenant le parallélisme avec la première courroie (5).

8. Dispositif (1) selon la revendication 5, comprenant en outre :
une troisième courroie (73) disposée adjacente dans le premier sens à la première courroie (5) afin d'avoir la seconde courroie (11) entre la première courroie (5) et la troisième courroie (73) et le déplacement dans un sens identique au premier sens ;
un élément résilient (81) suspendu sur la troisième courroie (73) et disposé afin de placer la pâte (7) entre la troisième courroie (73) et l'élément résilient (81), resserrant ainsi la pâte (7) roulée.
